# EUROPEAN PATENT SPECIFICATION

(11) **EP 4 499 582 B1**
(45) Date of publication and mention of the grant of the patent: **18.02.2026**
(21) Application number: 23781514.7
(22) Date of filing: 16.01.2023
(51) Int. Cl.: C03C 17/36

(54) **A LOW-E COATING FOR GLASS SURFACES AND A GLASS WITH A LOW-E COATING**
LOW-E-BESCHICHTUNG FÜR GLASOBERFLÄCHEN UND GLAS MIT LOW-E-BESCHICHTUNG
REVÊTEMENT À FAIBLE ÉMISSIVITÉ POUR SURFACES DE VERRE ET VERRE À REVÊTEMENT À FAIBLE ÉMISSIVITÉ

(30) Priority: 31.03.2022 TR 202205047
(43) Date of publication of application: 05.02.2025
(73) Proprietor: Türkiye Sise Ve Cam Fabrikalari Anonim Sirketi, 34947 Tuzla/Istanbul (TR)
(72) Inventor: SEZGIN, Alperen, Tuzla/Istanbul (TR); ERASLAN AVCIOGLU, Sinem, Tuzla/Istanbul (TR); CAKAR, Elcin, Tuzla/Istanbul (TR)
(74) Representative: Kaya, Erdem
(86) International application number: PCT/TR2023/050030
(87) International publication number: WO 2023/191738

(56) References cited:
- EP-A2- 3 922 615
- WO-A1-2017/123169
- WO-A1-2018/106203
- WO-A2-2020/130980
- WO-A2-2020/130981
- CN-A- 106 186 724
- CN-U- 209 242 943

## Description

### TECHNICAL FIELD

The invention relates to a low-e coating that provides solar control and thermal insulation for glass surfaces with high heat treatment resistance and stable mechanical, permeability, and color values before and after heat treatment, and to a glass with the said low-e coating.

### BACKGROUND

The glass used in the architectural and automotive sectors is coated with coating materials to improve its mechanical, optical, and physical properties. There are many different forms and functionalities of glass coating materials in the glass industry, and studies are continuing to improve their properties day by day. Low-e (low-emission) coating materials is one of the most widely used coating materials in the related technical field. The said low-e coating materials provide fuel and energy savings by providing solar (enabling to reduce UV rays by 70% or more) and temperature control for glasses. In addition, low-e coatings provide transparency for glass surfaces while at the same time protecting them from cold air.

Low-e coatings consist of layers comprising metals, oxides, nitrides, or hydrides, each with different functionalities. The mechanical, optical, and physical properties of the glass surfaces are improved by the synergistic effect created by the metal-comprising layers among themselves, thus ensuring that the interior spaces remain cool in the summer and warm in the winter.

In order to improve the properties of glass surfaces in the technical field, low-e coatings comprise infrared reflective layers with many different structures and properties. In addition, low-e coatings can comprise a plurality of infrared reflective layers depending on the desired properties. The invention with patent number WO2019157798 A1 describes a low-e coating material comprising a double infrared reflective layer and glass coated with this coating material. There are two layers comprising silver metal as the infrared reflective layer. The invention with patent number CN112250322 relates to a low-e coated glass product comprising a single silver infrared reflective layer. In the said invention, the coating layers are realized by magnetron sputtering on glass surfaces.

The transmittance and reflectance values of glasses coated with low-e coating in the visible, near-infrared, and infrared regions of the solar energy spectrum can be achieved at targeted levels.

In addition to transmittance and reflectivity, selectivity is also an important parameter in the coated glass. Selectivity is defined in the ISO 9050 (2003) Standard as the ratio of the visible region transmittance value to the solar factor. The selectivity values of coatings can be kept at targeted levels with the number of Ag layers they comprise, the type of nucleating layer used, reflection reducing dielectric layer combinations, and parametric optimizations of the layers.

As a result of applying heat treatments to the glass and low-e coating materials in the art; mechanical, transmittance, color parameters, and delta-E values change before and after heat treatment. For eliminating the aforementioned negative situation, the thickness of the barrier layers and/or infrared reflective layers in the low-e coatings is increased in order to provide thermal resistance and low transmittance properties. In this case, where the layers with metallic content are thicker, the optical values change much more after heat treatment, as well as the increase in visible region reflections. It has become a necessity to make arrangements to ensure that the changes in the mechanical, optical, and physical properties of low-e coatings before and after heat treatment remain at least at acceptable levels or that no changes occur.

### BRIEF DESCRIPTION OF THE INVENTION

The present invention relates to a low-e coating for glass surfaces to remove disadvantages in the relevant technical field as well as to provide additional technical solutions and advantages in the relevant technical field.

In one aspect, the invention relates to a glass comprising a low-e coating with improved mechanical, physical, and optical properties.

The main object of the invention is to provide a low-e coating that ensures that the optical properties of glass surfaces remain stable before and after heat treatment applications.

Another object of the invention is to provide a low-e coating that ensures that the physical and mechanical properties of glass surfaces remain stable before and after heat treatment applications. By coating the obtained low-e coating on glass surfaces, it is possible to obtain glasses with high mechanical and physical properties.

A further object of the invention is to provide a low-e coating for glass surfaces with medium-low levels of radiation transmittance.

A further object of the invention is to provide a low-e coating for glass surfaces having a neutral blue color.

In order to provide all these benefits, the invention relates to a low-e coating suitable for use on glass surfaces, which has high heat treatment resistance, wherein the mechanical, physical, and optical properties remain stable before and after heat treatment, and which provides solar control and thermal insulation for glass surfaces. Accordingly, the low-e coating comprises the following layers, respectively, from the glass to the atmosphere;
- A first dielectric layer comprising at least one of SixNy, SiOxNy, ZnSnOx, TiOx, TiNx, ZrNx,
- A reflection reducing layer comprising TiOx,
- A first nucleating layer comprising at least one of SixNy, TiNx, ZrNx, ZnSnOx, ZnAlOx, SiOxNy, TiOx, ZnOx,
- A first barrier layer comprising at least one of NiCr or NiCrOx,
- A first infrared reflective layer,
- A second barrier layer comprising at least one of NiCr or NiCrOx,
- A second dielectric layer comprising at least one of SixNy, TiNx, ZrNx, ZnSnOx, ZnAlOx, SiOxNy, TiOx, ZnOx,
- A second nucleating layer comprising at least one of TiOx, ZnAlOx, ZnOx, ZnSnOx,
- A second infrared reflective layer,
- A third barrier layer comprising at least one of NiCr or NiCrOx,
- A third dielectric layer comprising at least one of SixNy, TiNx, ZrNx, ZnSnOx, ZnAlOx, SiOxNy, TiOx, ZnOx,
- A fourth dielectric layer comprising at least one of ZnAlOx, SiOxNy, TiOx,
- A top dielectric layer comprising the TiOx layer,
and it comprises a middle sandwich structure (28), positioned between the second dielectric layer and the second nucleating layer and comprising the following layers, respectively, outward from the glass, to ensure that the mechanical, permeability and color values of the low-e coating before and after heat treatment remain stable within manufacturing tolerances;
- A first thermal barrier layer comprising SixNy,
- A regulating layer comprising at least one of NiCr and/or NiCrOx,
- A second thermal barrier layer comprising SixNy.

In this way, a glass that minimizes changes in color, optical, and mechanical properties before and after heat treatment applications can be obtained.

In a possible embodiment of the invention, the first infrared reflective layer in the low-e coating is at least one of silver and/or silver oxide and/or copper and/or copper oxide and/or gold and/or gold oxides. In the most preferred embodiment, the first infrared reflective layer in the low-e coating is one of silver and/or silver oxide.

In a possible embodiment of the invention, the second infrared reflective layer in the low-e coating is at least one of silver and/or silver oxide, copper and/or copper oxide and/or gold and/or gold oxides. In the most preferred embodiment, the second infrared reflective layer in the low-e coating is one of silver and/or silver oxides.

In a possible embodiment of the invention, the middle sandwich structure in the low-e coating is configured to comprise the following layers, respectively, from the glass to the atmosphere;
- A first thermal barrier layer comprising SixNy,
- A regulating layer comprising NiCrOx,
- A second thermal barrier layer comprising SixNy.

In this way, it is possible to obtain a glass in which changes in color, optical and mechanical properties remain stable before and after heat treatment applications. Furthermore, this ensures that the glass has a neutral blue color.

In a possible embodiment of the invention, the middle sandwich structure in the low-e coating has the following layers, respectively, from the glass to the atmosphere;
- A first thermal barrier layer comprising SixNy with a thickness in the range of 20 nm to 30 nm
- A regulating layer comprising NiCrOx with a thickness in the range of 4 nm to 7 nm
- A second thermal barrier layer comprising SixNy with a thickness in the range of 20 nm to 30 nm.

In a possible embodiment of the invention, the said low-e coating comprises the following layers, respectively, from the glass to the atmosphere;
o A first dielectric layer selected from SixNy or SiOxNy,
o A reflection reducing layer comprising TiOx,
o A first nucleating layer selected from ZnOx or ZnAlOx,
o A first barrier layer selected from NiCr or NiCrOx,
o An infrared reflective layer comprising Ag,
o A second barrier layer selected from NiCr or NiCrOx,
o A second dielectric layer selected from ZnAlOx or ZnOx,
o A first thermal barrier layer comprising SixNy,
o A regulating layer selected from NiCr or NiCrOx,
o A second thermal barrier layer comprising SixNy,
o A second nucleating layer selected from ZnAlOx or ZnOx,
o A second infrared reflective layer comprising Ag,
o A third barrier layer selected from NiCr or NiCrOx,
o A third dielectric layer selected from ZnOx or ZnAlOx,
o A fourth dielectric layer selected from ZnAlOx or SiOxNy,
o A top dielectric layer comprising TiOx.

In a possible embodiment of the invention, the said low-e coating comprises the following layers, respectively, from the glass to the atmosphere;
o A first dielectric layer comprising SixNy,
o A reflection reducing layer comprising TiOx,
o A first nucleating layer comprising ZnAlOx,
o A first barrier layer comprising NiCr,
o An infrared reflective layer comprising Ag,
o A second barrier layer comprising NiCrOx,
o A second dielectric layer comprising ZnAlOx,
o A first thermal barrier layer comprising SixNy,
o A regulating layer selected from NiCr and/or NiCrOx,
o A second thermal barrier layer comprising SixNy,
o A second nucleating layer comprising ZnAlOx,
o A second infrared reflective layer comprising Ag,
o A third barrier layer comprising NiCrOx,
o A third dielectric layer comprising ZnAlOx,
o A fourth dielectric layer comprising SiOxNy,
o A top dielectric layer comprising TiOx.

In a possible embodiment of the invention, the said low-e coating comprises the following steps, respectively, from the glass to the atmosphere;
o A first dielectric layer comprising SixNy with a thickness in the range of 10 nm to 20 nm,
o A reflection reducing layer comprising TiOx with a thickness in the range of 3 nm to 7 nm,
o A first nucleating layer comprising ZnAlOx with a thickness in the range of 10 to 20 nm,
o A first barrier layer comprising NiCr with a thickness in the range of 0.5 nm to 3 nm,
o A first infrared reflective layer comprising Ag with a thickness in the range of 10 to 20 nm,
o A second barrier layer comprising NiCrOx with a thickness in the range of 1 nm to 3 nm,
o A second dielectric layer comprising ZnAlOx with a thickness in the range of 10 to 20 nm,
o A first thermal barrier layer comprising SixNy with a thickness in the range of 20 nm to 30 nm,
o A regulating layer comprising NiCrOx with a thickness in the range of 4 nm to 7 nm,
o A second thermal barrier layer comprising SixNy with a thickness in the range of 20 nm to 30 nm,
o A second nucleating layer comprising ZnAlOx with a thickness in the range of 10 to 20 nm,
o A second infrared reflective layer comprising Ag with a thickness in the range of 10 to 20 nm,
o A third barrier layer comprising NiCrOx with a thickness in the range of 1 nm to 3 nm,
o A third dielectric layer comprising ZnAlOx with a thickness in the range of 10 nm to 20 nm,
o A fourth dielectric layer comprising SiOxNy with a thickness in the range of 20 nm to 30 nm,
o A top dielectric layer comprising TiOx with a thickness in the range of 1 nm to 5 nm.

In a possible embodiment of the invention, the said low-e coating comprises the following layers, respectively, from the glass to the atmosphere;
o A first dielectric layer comprising SixNy with a thickness in the range of 12 nm to 18 nm,
o A reflection reducing layer comprising TiOx with a thickness in the range of 4 nm to 6 nm,
o A first nucleating layer comprising ZnAlOx with a thickness in the range of 12 to 18 nm,
o A first barrier layer comprising NiCr with a thickness in the range of 0.8 nm to 1.3 nm,
o A first infrared reflective layer comprising Ag with a thickness in the range of 12 to 18 nm,
o A second barrier layer comprising NiCrOx with a thickness in the range of 1.5 nm to 2.7 nm,
o A second dielectric layer comprising ZnAlOx with a thickness in the range of 10 nm to 20 nm,
o A first thermal barrier layer comprising SixNy with a thickness in the range of 20 nm to 30 nm,
o A regulating layer comprising NiCrOx with a thickness in the range of 4 nm to 7 nm,
o A second thermal barrier layer comprising SixNy with a thickness in the range of 20 nm to 30 nm,
o A second nucleating layer comprising ZnAlOx with a thickness in the range of 11 to 15 nm,
o A second infrared reflective layer comprising an Ag layer with a thickness in the range of 12 to 18 nm,
o A third barrier layer comprising NiCrOx with a thickness in the range of 1.5 nm to 2.7 nm,
o A third dielectric layer comprising ZnAlOx with a thickness in the range of 11 nm to 15 nm,
o A fourth dielectric layer comprising SiOxNy with a thickness in the range of 22 nm to 25 nm,
o A top dielectric layer comprising TiOx with a thickness in the range of 2 nm to 4 nm.

### BRIEF DESCRIPTION OF THE FIGURES

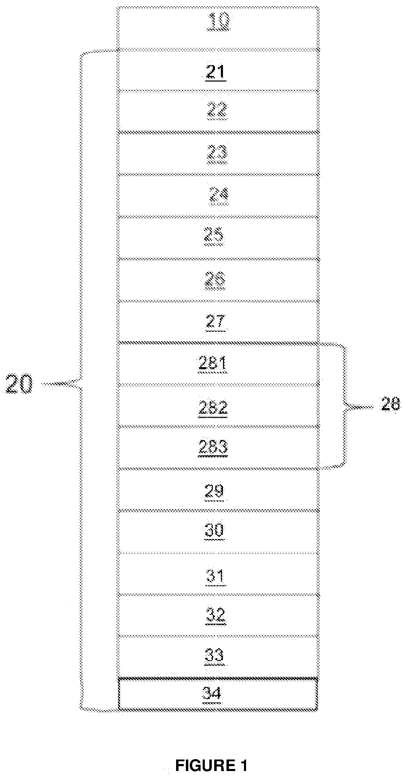

Figure 1 shows a representative schematic view of low-e coating.

### BRIEF DESCRIPTION OF REFERENCES

10 Glass
20 Low-e Coating
   21 First Dielectric Layer
   22 Reflection Reducing Layer
   23 First Nucleating Layer
   24 First Barrier Layer
   25 First Infrared Reflective Layer
   26 Second Barrier Layer
   27 Second Dielectric Layer
   28 Middle Sandwich Structure
      281 First Thermal Barrier Layer
      282 Regulating Layer
      283 Second Thermal Barrier Layer
   29 Second Nucleating Layer
   30 Second Infrared Reflective Layer
   31 Third Barrier Layer
   32 Third Dielectric Layer
   33 Fourth Dielectric Layer
   34 Top dielectric Layer

### DETAILED DESCRIPTION OF THE INVENTION

In this detailed description, the subject matter of the invention relates to a low-e coating (20) suitable for use on glass (10) surfaces, having a high thermal resistance for heat treatment, and is described by way of non-limiting examples only for a better understanding of the subject matter. The "/" symbol in this text is used as a separator between layers.

In another aspect, the invention relates to the production of low-e coated (20) glasses (10). The production of architectural and automotive low-e coated (20) glasses (10) is carried out by sputtering (hereinafter referred to in the text as the sputter method).

The present invention generally relates to a low-e coated (20) glass (10) suitable for use as thermal insulating glass (10) with a medium-low visible daylight transmittance (hereinafter referred to as %Tᵥᵢₛ) and high heat treatment resistance, as well as to the content and application of said low-e coating (20).

The desired functionality of the low-e coating (20) of the invention is mainly the stability of mechanical, physical and optical property values before and after heat treatment. The heat treatments mentioned herein are at least one of tempering, partial tempering, annealing and bending. In order to provide these properties, low-e coating (20) comprises a plurality of layers. Said layers are applied sequentially in the low-e coating (20) so as to have certain functions. The low-e coating (20) of the invention comprises a plurality of layers to provide the desired properties and said layers are deposited on each other in a vacuum environment.

Low-e coating (20) layers can be metal, metal oxide, metal nitride, metal oxynitride, metal hydrides. If preferred, the layers can comprise a plurality of metals.

Low-e coating (20) of the invention comprises at least one infrared reflective layer to provide the desired physical, mechanical and optical properties.

Low-e coating (20) of the invention preferably comprises a plurality of infrared reflective layers, wherein the number of said infrared reflective layers may be 2, 3 or 4.

The low-e coating (20) comprises silver and/or silver-based compound(s) as an infrared reflective layer. If preferred, the low-e coating (20) may comprise copper and/or copper oxide and/or gold compound(s) instead of or in combination with silver as the infrared reflective layer.

In the low-e coating (20), if the number of infrared reflective layers is more than one, the infrared reflective layers may all be silver and/or silver oxide. Preferably, the infrared reflective layers may all be derived from different compounds, wherein silver and/or silver oxide, copper and/or copper oxide and/or gold and/or gold oxides may be used as said infrared reflective layer.

Low-e coating (20) of the invention comprises a first infrared reflective layer (25) and a second infrared reflective layer (30) comprising silver (abbreviated as Ag) and/or silver oxides (abbreviated as AgOx).

Low-e coating (20) of the invention comprises a first infrared reflective layer (25) with a thickness of 8 nm to 22 nm. In a preferred embodiment, the thickness of the first infrared reflective layer (25) is in the range of 10 nm to 19 nm. In the most preferred embodiment, the thickness of the first infrared reflective layer (25) is in the range of 13 nm to 16 nm.

Low-e coating (20) of the invention comprises a second infrared reflective layer (30) with a thickness in the range of 8 nm to 23 nm. In a preferred embodiment, the second infrared reflective layer (30) has a thickness in the range of 10 nm to 20 nm. In a most preferred embodiment, the second infrared reflective layer (30) has a thickness in the range of 13 nm to 17 nm.

Low-e coating (20) of the invention comprises at least one first barrier layer (24) and at least one second barrier layer (26) so that the first infrared reflective layer (25) comprising silver is not affected by the process gases used for the production of the layers. In the possible embodiment of the invention, the low-e coating (20) comprises a first barrier layer (24) positioned in the lower vicinity of the first infrared reflective layer (25) and a second barrier layer (26) positioned in the upper vicinity. The first barrier layer (24) and the second barrier layer (26) surround the first infrared reflective layer (25) as a sandwich structure. At the same time, the first barrier layer (24) and the second barrier layer (26) precede and follow the first infrared reflective layer (25), ensuring structural compatibility in the metallic and dielectric transition between the dielectric layers and eliminating possible adhesion weakness before heat treatment.

Low-e coating (20) material of the invention comprises at least one of the compounds of nickel-chromium (abbreviated as NiCr), nickel-chromium oxide (abbreviated as NiCrOx), titanium oxide (abbreviated as TiOx), zinc aluminum oxide (abbreviated as ZnAlOx) as the first barrier layer (24). In the preferred embodiment, the first barrier layer (24) comprises NiCr. In the invention, the first barrier layer (24) has a thickness in the range of 0.5 nm to 3 nm. Preferably, the first barrier layer (24) has a thickness in the range of 0.6 nm to 2 nm. In the most preferred embodiment, the thickness of the first barrier layer (24) is in the range of 0.8 nm to 1.5 nm.

The said second barrier layer (26) comprises at least one of NiCr, NiCrOx, TiOx, ZnAlOx. Preferably, the second barrier layer (26) comprises NiCrOx.

In the invention, the thickness of the second barrier layer (26) is in the range of 1 nm to 3 nm. Preferably, the second barrier layer (26) has a thickness in the range of 1.5 nm to 2.7 nm. In the most preferred embodiment, the thickness of the second barrier layer (26) is in the range of 1.8 nm to 2.2 nm.

In the low-e coating (20), at least one first dielectric layer (21) is positioned in the upper vicinity of the glass (10). This first dielectric layer (21) acts as a diffusion barrier in the low-e coating (20) to prevent alkali ion migration, which is facilitated at high temperatures.

The first dielectric layer (21) comprises at least one of SiₓN_{y}, SiOₓN_{y}, ZnSnOₓ, TiOₓ, TiNₓ, ZrNₓ. In a preferred embodiment, the first dielectric layer (21) comprises one or both of SixNy and/or SiOxNy. In a most preferred embodiment, the first dielectric layer (21) comprises SixNy.

In the low-e coating (20) of the invention, the thickness of the said first dielectric layer (21) is in the range of 8 nm to 22 nm. Preferably, the thickness of the first dielectric layer (21) is in the range of 10 to 19 nm. In the most preferred embodiment, the thickness of the first dielectric layer (21) is in the range of 13 nm to 16 nm.

Low-e coating (20) of the invention comprises at least one reflection reducing layer (22). The said reflection reducing layer (22) is positioned in the upper vicinity of the first dielectric layer (21). The reflection reducing layer (22) comprises TiOx. The reflection reducing layer (22) ensures that the low-e coating (20) has a reflection reducing effect in the visible region. The reflection reducing layer (22) can be used between the first infrared reflective layer (25) and the glass (10) to achieve this effect even at low thickness values.

Low-e coating (20) of the invention comprises a reflection reducing layer (22) with a thickness in the range of 2 nm to 10 nm. Preferably, the thickness of the reflection reducing layer (22) is in the range of 3 nm to 8 nm. In the most preferred embodiment, the thickness of the reflection reducing layer (22) is in the range of 4 nm to 6 nm.

Low-e coating (20) of the invention comprises at least one first nucleating layer (23) positioned in the upper vicinity of the reflection reducing layer (22). The function of said first nucleating layer (23) is to provide a more crystalline structure of the first infrared reflective layer (25) positioned in the upper vicinity thereof. The first nucleating layer (23) comprises at least one of SiOxNy, ZnSnOx, ZnAlOx, ZnAlOx, TiOx. In a preferred embodiment, the first nucleating layer (23) comprises ZnAlOx.

Low-e coating (20) of the invention comprises a first nucleating layer (23) with a thickness in the range of 8 nm to 26 nm. The thickness of the said first nucleating layer (23) is preferably in the range of 10 nm to 22 nm. Most preferably, the first nucleating layer (23) has a thickness in the range of 12 nm to 18 nm.

Low-e coating (20) of the invention comprises at least one second dielectric layer (27) positioned in the upper vicinity of the second barrier layer (26). The second dielectric layer (27) comprises at least one of SiOxNy, ZnSnOx, ZnAlOx, ZnAlOx, TiOx. In the preferred embodiment, the second dielectric layer (27) comprises ZnAlOx. The second dielectric layer (27) has a thickness in the range of 8 nm to 25 nm. In the preferred embodiment, the second dielectric layer (27) has a thickness in the range of 10 nm to 20 nm. Most preferably the second dielectric layer (27) has a thickness in the range of 11 nm to 15 nm.

Low-e coating (20) of the invention comprises at least a third barrier layer (31) positioned in the upper vicinity of the second infrared reflective layer (30). The third barrier layer (31) provides mechanical strength for the second infrared reflective layer (30) and structural compatibility in the metallic and dielectric transition between said dielectric layers, thus eliminating possible adhesion weakness before heat treatment.

The said third barrier layer (31) comprises at least one of NiCr, NiCrOx, TiOx, ZnAlOx. In a preferred embodiment, the third barrier layer (31) comprises NiCrOx. The thickness of the third barrier layer (31) is in the range of 1 nm to 3 nm. Preferably, the thickness of the third barrier layer (31) is in the range of 1.5 nm to 2.7 nm. In the most preferred embodiment, the thickness of the third barrier layer (31) is in the range of 1.8 nm to 2.2 nm.

Low-e coating (20) of the invention comprises at least one second nucleating layer (29). Said second nucleating layer (29) is positioned in the lower vicinity of the second infrared reflective layer (30). The second nucleating layer (29) comprises at least one of TiOx, ZnAlOx, ZnOx, ZnSnOx. The second nucleating layer (29) has the same function as the first nucleating layer (23) in that it enables the second infrared reflective layer (30) to grow in a more crystalline structure. Preferably, the second nucleating layer (29) comprises ZnAlOx.

The second nucleating layer (29) has a thickness in the range of 8 nm to 20 nm. The said second nucleating layer (29) preferably has a thickness in the range of 11 nm to 15 nm.

Low-e coating (20) of the invention comprises at least a third dielectric layer (32) positioned in the upper vicinity of the third barrier layer (31). Said third dielectric layer (32) provides increased mechanical bonding between the third barrier layer (31) and the fourth dielectric layer (34). The third dielectric layer (32) comprises at least one of SixNy, TiNx, ZrNx, ZnSnOx, ZnAlOx, SiOxNy, TiOx, ZnOx.

In the low-e coating (20) of the invention, the thickness of the third dielectric layer (32) is in the range of 9 nm to 20 nm. In a preferred embodiment, the third dielectric layer (32) is in the range of 12 nm to 15 nm.

Low-e coating (20) of the invention comprises at least a fourth dielectric layer (33) positioned in the upper vicinity of the third dielectric layer (32). The said fourth dielectric layer (33) generally protects the entire array against heavy mechanical impact. The fourth dielectric layer (33) comprises at least one of ZnAlOx, SiOxNy, TiOx. In the preferred embodiment, the fourth dielectric layer (33) comprises SiOxNy.

The thickness of the fourth dielectric layer (33) is in the range of 17 nm to 30 nm. Preferably, the thickness of the fourth dielectric layer (33) is in the range of 20 nm to 28 nm. Most preferably, the thickness of the fourth dielectric layer (33) is in the range of 22 nm to 25 nm.

Low-e coating (20) of the invention comprises at least one top dielectric layer (34) positioned in the upper vicinity of the fourth dielectric layer (33). The said top dielectric layer (34) increases scratch resistance by reducing friction. The top dielectric layer (34) comprises TiOx.

Low-e coating (20) of the invention comprises a top dielectric layer (34) with a thickness in the range of 1 nm to 5 nm. The thickness of said top dielectric layer (34) is preferably in the range of 2 nm to 4 nm.

Low-e coating (20) of the invention is applied to improve the mechanical, physical and optical properties of glass (10) surfaces. As is in the state of the art, heat treatments can also be applied to improve the mechanical, optical and physical properties of glass (10) surfaces. It is in the state of the art that during the application of heat treatments, adverse effects exist for low-e coatings (20) and changes occur in the optical, mechanical and physical properties of low-e coatings (20). The present invention provides arrangements for stabilizing the mechanical, optical and physical properties of low-e coatings (20) before and after heat treatment. Accordingly, in the invention, the low-e coating (20) comprises a middle sandwich structure (28) in order to overcome the disadvantages of the art and to improve the mechanical, optical and physical properties of the final product. The said middle sandwich structure (28) is positioned between the first infrared reflective layer (25) and the second infrared reflective layer (30). The middle sandwich structure (28) comprises, from the glass (10) to the atmosphere, respectively at least one first thermal barrier layer (281) / at least one regulating layer (282) / at least one second thermal barrier layer (283).

The first thermal barrier layer (281) is preferably positioned in the upper vicinity of the second dielectric layer (27). The first thermal barrier layer (281) comprises SixNy. The thickness of the first thermal barrier layer (281) is in the range of 15 nm to 35 nm. In a preferred embodiment, the thickness of the first thermal barrier layer (281) is in the range of 17 nm to 33 nm. Most preferably, the thickness of the first thermal barrier layer (281) is in the range of 20 nm to 30 nm.

The middle sandwich structure comprises at least one of NiCr and/or NiCrOx as the regulating layer (282). The thickness of the said regulating layer (282) is preferably in the range of 2 nm to 13 nm. In a preferred embodiment, the thickness of the regulating layer (282) is preferably in the range of 2 nm to 10 nm. Most preferably, the thickness of the regulating layer (282) is preferably in the range of 4 nm to 7 nm.

The middle sandwich structure (28) comprises a second thermal barrier layer (283). Said second thermal barrier layer (283) comprises SixNy. The thickness of the second thermal barrier layer (283) is in the range of 15 nm to 35 nm. In a preferred embodiment, the thickness of the second thermal barrier layer (283) is in the range of 17 nm to 33 nm. Most preferably, the thickness of the second thermal barrier layer (283) is in the range of 20 nm to 30 nm.

In the invention, the first thermal barrier layer (281) / regulating layer (282) / second thermal barrier layer (283) contained in the middle sandwich structure (28) enable the thermal resistance and optical properties of the low-e coating (20) to be improved.

In the current art, the thickness of the first barrier layer (24), the second barrier layer (26) and the third barrier layer (31) or the silver-comprising first infrared reflective layer (25) and the second infrared reflective layer (30) were increased to provide thermal resistance and low transmittance in low-e coatings (20). In this case where the metallic layers were thicker, not only did the visible reflections increase but also the optical values changed much more after heat treatment. The low-e coating (20) of the invention, thanks to the first thermal barrier layer (281) comprising SixNy / regulating layer (282) comprising NiCr and/or NiCrOx / second thermal barrier layer (283) comprising SixNy, the desired low transmittance level after heat treatment can be obtained with minimum change. In the case of using the middle sandwich structure (28) characterized in the invention, the transmittance reduction is largely provided by the thickness of the regulating layer (282) comprising NiCr and/or NiCrOx located between the first thermal barrier layer (281) comprising SixNy and the second thermal barrier layer (283). By keeping the thickness of the NiCr and/or NiCrOx comprising regulating layer (282) in the middle sandwich structure (28) high, the thicknesses of the first barrier layer (24), the second barrier layer (26) and the third barrier layer (31) can be kept thin. Considering the arrangement of the middle sandwich structure (28), the heat treatment exposure of the regulating layer (282) comprising NiCr and/or NiCrOx is kept to a minimum due to the fact that it is symmetrically located in the middle and positioned between the first thermal barrier layer (281) comprising SixNy and the second thermal barrier layer (283). Another advantage of this structure is that the transmittance level can be regulated by the middle sandwich structure (28), enabling examples of different transmittance levels to be obtained with minimal layer arrangement changes.

The inventors have determined that the changes in the optical, mechanical and chemical properties of the low-e coating (20) of the invention before and after heat treatment are realized in a way to remain stable within the production tolerances thanks to the middle sandwich structure (28). In order to prove this, the inventors compare the changes in transmittance and color parameters before and after heat treatment of the glass (10) and low-e coating (20) without the middle sandwich structure (28) given in Table 1 with the changes in transmittance and color parameters before and after heat treatment of the glass (10) and low-e coating (20) of the invention given in Table 2.

**Table 1. Example of low-e coating (20) without Middle Sandwich Structure (28)**

| **Low-e Coating of the Invention (respectively, from glass to atmosphere)** | **Layer Thicknesses (nm)** |
|---|---|
| SiN | 10-20 |
| TiOx | 3-7 |
| ZnAlOx | 10-20 |
| NiCrOx | 1-3 |
| Ag | 10-20 |
| NiCrOx | 1-3 |
| ZnAlOx | 10-20 |
| SiN | 40-60 |
| ZnAlOx | 10-20 |
| Ag | 10-20 |
| NiCrOx | 3-7 |
| ZnAlOx | 10-20 |
| SiOxNy | 20-30 |

**Table 2. Example of Low-e Coating (20) of the Invention with a Middle Sandwich Structure (28)**

| **Low-e Coating of the Invention (respectively, from glass to atmosphere)** | **Layer Thicknesses (nm)** |
|---|---|
| SiN | 10-20 |
| TiOx | 3-7 |
| ZnAlOx | 10-20 |
| NiCr | 1-3 |
| Ag | 10-20 |
| NiCrOx | 1-3 |
| ZnAlOx | 10-20 |
| SiN | 20-30 |
| NiCrOx | 3-7 |
| SiN | 20-30 |
| ZnAlOx | 10-20 |
| Ag | 10-20 |
| NiCrOx | 2-7 |
| ZnAlOx | 10-20 |
| SiOxNy | 10-20 |
| TiOx | 1-5 |

The differences between the transmittance, color parameters and delta-E values of the low-e coating (20) example comprising the layers given in Table 1 before and after heat treatments are given in Table 3.

**Table 3. Changes in transmittance and color parameters of low-e coating (20) example without Middle Sandwich Structure (28) before and after heat treatment**

| **Treatment** | **Daylight** | **Solar Energy** | | | **Color Parameters (L a* b* system)** | | | | | |
|---|---|---|---|---|---|---|---|---|---|---|
| | **(EN 410)** | **(EN 410)** | | | **a*** | | | **b*** | | |
| | **T%** | Rout% | Rin% | g% | **T** | **Rc** | **Ru** | **T** | **Rc** | **Ru** |
| Before Heat Treatment | 39,5 | 18,0 | 17,3 | 24,4 | -5,4 | -20,2 | -5,9 | 2,3 | -8,9 | -9,4 |
| After Heat Treatment | 49,6 | 19,8 | 17,9 | 28,3 | -3,5 | -19,2 | -6,5 | 4,1 | -11,9 | -8,0 |
| Delta-E | 10,1 | 9,8 | 0,6 | 3,9 | -1,9 | -1 | -0,6 | 1,8 | -3 | -1,4 |

When the data given in Table 3 are examined, it is determined that the low-e coating (20) without the middle sandwich structure (28) has high changes in transmittance and color parameters before and after heat treatments.

The differences between the transmittance, color parameters and delta e values before and after heat treatment of the low-e coating of the invention comprising the layers given in Table 2 are given in Table 4.

**Table 4. Changes in transmittance and color parameters of the Low-e Coating (20) of the Invention Example with a Middle Sandwich Structure (28) before and after heating**

| **Treatmen t** | **Dayligh t** | **Solar Energy** | | | **Color Parameters (L a* b* system)** | | | | | |
|---|---|---|---|---|---|---|---|---|---|---|
| | **(EN 410)** | **(EN 410)** | | | **a*** | | | **b*** | | |
| | **T%** | Rout% | Rin% | g% | T | Rc | Ru | T | Rc | Ru |
| Before Heat Treatmen t | 47 | 15 | 14 | 26 | -5,6 | 1,7 | -2,2 | 7,4 | -26,9 | -15,9 |
| After Heat Treatmen t | 50 | 16 | 14 | 27 | -5,6 | -0,2 | -2,5 | 6,1 | -26 | -14,8 |
| Delta | 3 | 1 | 0 | 1 | 0 | -1,9 | 0,3 | 1,3 | 0,9 | -1,1 |

When the values shared in Table 4 are examined, it is determined that the changes in the transmittance and color parameters of the low-e coating (20) with the middle sandwich structure (28) before and after heat treatment are within the production tolerances (very low). For this reason, it is ensured that the said changes between the pre- and post-heat treatment conditions of the low-e coating (20) of the invention with the middle sandwich structure (28) and other layers are kept at minimum values.

The low-e coating (20) of the present invention provides the glass (10) with a neutral color due to the middle sandwich structure (28) and other layers. The glass (10) with the low-e coating (20) of the invention has a neutral blue color.

The protection scope of the invention is determined in the appended claims and cannot be strictly limited to what has described in this detailed description for illustrative purposes. It is clear that those skilled in art can come up with similar embodiments in the light of the foregoing without departing from the appended claims.

## Claims

1. A glass (10) having a heat treatable low-e coating (20) for solar control and thermal insulation of glass (10) surfaces, **characterized in that** the said low-e coating (20) comprises the following layers, respectively, from the glass to the atmosphere;
o A first dielectric layer (21) comprising at least one of SixNy, SiOxNy, ZnSnOx, TiOx, TiNx, ZrNx,
o A reflection reducing layer (22) comprising TiOx,
o A first nucleating layer (23) comprising at least one of SixNy, TiNx, ZrNx, ZnSnOx, ZnAlOx, SiOxNy, TiOx, ZnOx,
o A first barrier layer (24) comprising at least one of NiCr and/or NiCrOx,
o A first infrared reflective layer (25),
o A second barrier layer (26) comprising at least one of NiCr and/or NiCrOx,
o A second dielectric layer (27) comprising at least one of SixNy, TiNx, ZrNx, ZnSnOx, ZnAlOx, SiOxNy, TiOx, ZnOx,
o A second nucleating layer (29) comprising at least one of TiOx, ZnAlOx, ZnOx, ZnSnOx,
o A second infrared reflective layer (30),
o A third barrier layer (31) comprising at least one of NiCr and/or NiCrOx,
o A third dielectric layer (32) comprising at least one of SixNy, TiNx, ZrNx, ZnSnOx, ZnAlOx, SiOxNy, TiOx, ZnOx,
o A fourth dielectric layer (33) comprising at least one of ZnAlOx, SiOxNy, TiOx,
o A top dielectric layer (34) comprising TiOx,
and
that it comprises a middle sandwich structure (28), positioned between the second dielectric layer and the second nucleating layer and comprising the following layers, respectively, outward from the glass, to ensure that the mechanical, permeability, and color values of the low-e coating before and after heat treatment remain stable within manufacturing tolerances;
- A first thermal barrier layer (281) comprising SixNy,
- A regulating layer (282) comprising at least one of NiCr and/or NiCrOx,
- A second thermal barrier layer (283) comprising SixNy.

2. A low-e coated (20) glass (10) according to claim 1, **characterized in that** the said first infrared reflective layer (25) is at least one of silver and/or silver oxide and/or copper and/or copper oxide and/or gold and/or gold oxides.

3. A low-e coated (20) glass (10) according to claim 2, **characterized in that** the first infrared reflective layer (25) is one of silver and/or silver oxides.

4. A low-e coated (20) glass (10) according to any one of the preceding claims, **characterized in that** the second infrared reflective layer (30) is at least one of silver and/or silver oxide and/or copper and/or copper oxide and/or gold and/or gold oxides.

5. A low-e coated (20) glass (10) according to claim 4, **characterized in that** the second infrared reflective layer (30) is one of silver and/or silver oxides.

6. A low-e coated (20) glass (10) according to any one of the preceding claims, **characterized in that** the said middle sandwich structure (28) comprises the following layers, respectively, from the glass (10) to the atmosphere;
§ A first thermal barrier layer (281) comprising SixNy,
§ A regulating layer (282) comprising NiCrOx,
§ A second thermal barrier layer (283) comprising SixNy.

7. A low-e coated (20) glass (10) according to claim 6, **characterized in that** the middle sandwich structure (28) comprises the following layers, respectively, from the glass (10) to the atmosphere;
§ A first thermal barrier layer (281) comprising SixNy with a thickness in the range of 20 nm to 30 nm,
§ A regulating layer (282) comprising NiCrOx with a thickness in the range of 4 nm to 7 nm,
§ A second thermal barrier layer (283) comprising SixNy with a thickness in the range of 20 nm to 30 nm.

8. A low-e coated (20) glass (10) according to claim 1, **characterized in that** it comprises the following layers, respectively, from the glass to the atmosphere;
o A first dielectric layer (21) selected from SixNy or SiOxNy,
o A reflection reducing layer (22) comprising TiOx,
o A first nucleating layer (23) selected from ZnOx or ZnAlOx,
o A first barrier layer (24) selected from NiCr or NiCrOx,
o An infrared reflective layer (25) comprising Ag,
o A second barrier layer (26) selected from NiCr or NiCrOx,
o A second dielectric layer (27) selected from ZnAlOx or ZnOx,
o A first thermal barrier layer (281) comprising SixNy,
o A regulating layer (282) selected from NiCr or NiCrOx,
o A second thermal barrier layer (283) comprising SixNy,
o A second nucleating layer (29) selected from ZnAlOx or ZnOx,
o A second infrared reflective layer (30) comprising Ag,
o A third barrier layer (31) selected from NiCr or NiCrOx,
o A third dielectric layer (32) selected from ZnOx or ZnAlOx,
o A fourth dielectric layer (33) selected from ZnAlOx or SiOxNy,
o A top dielectric layer (34) comprising TiOx.

9. A low-e coated (20) glass (10) according to claim 8, **characterized in that** it comprises the following layers, respectively, from the glass to the atmosphere;
o A first dielectric layer (21) comprising SixNy,
o A reflection reducing layer (22) comprising TiOx,
o A first nucleating layer (23) comprising ZnAlOx,
o A first barrier layer (24) comprising NiCr,
o An infrared reflective layer (25) comprising Ag,
o A second barrier layer (26) comprising NiCrOx,
o A second dielectric layer (27) comprising ZnAlOx,
o A first thermal barrier layer (281) comprising SixNy,
o A regulating layer (282) comprising NiCr or NiCrOx,
o A second thermal barrier layer (283) comprising SixNy,
o A second nucleating layer (29) comprising ZnAlOx,
o A second infrared reflective layer (30) comprising Ag,
o A third barrier layer (31) comprising NiCrOx,
o A third dielectric layer (32) comprising ZnAlOx,
o A fourth dielectric layer (33) comprising SiOxNy,
o A top dielectric layer (34) comprising TiOx.

10. A low-e coated (20) glass (10) according to claim 9, **characterized in that** it comprises the following layers, respectively, from the glass to the atmosphere;
o A first dielectric layer (21) comprising SixNy with a thickness in the range of 10 nm to 20 nm,
o A reflection reducing layer (22) comprising TiOx with a thickness in the range of 3 nm to 7 nm,
o A first nucleating layer (23) comprising ZnAlOx with a thickness in the range of 10 nm to 20 nm,
o A first barrier layer (24) comprising NiCr with a thickness in the range of 0.5 nm to 3 nm,
o A first infrared reflective layer (25) comprising Ag with a thickness in the range of 10 nm to 20 nm,
o A second barrier layer (26) comprising NiCrOx with a thickness in the range of 1 nm to 3 nm,
o A second dielectric layer (27) comprising ZnAlOx with a thickness in the range of 10 to 20 nm,
o A first thermal barrier layer (281) comprising SixNy with a thickness in the range of 20 nm to 30 nm,
o A regulating layer (282) comprising NiCrOx with a thickness in the range of 4 nm to 7 nm,
o A second thermal barrier layer (283) comprising SixNy with a thickness in the range of 20 nm to 30 nm,
o A second nucleating layer (29) comprising ZnAlOx with a thickness in the range of 10 to 20 nm,
o A second infrared reflective layer (30) comprising Ag with a thickness in the range of 10 to 20 nm,
o A third barrier layer (31) comprising NiCrOx with a thickness in the range of 1 nm to 3 nm,
o A third dielectric layer (32) comprising ZnAlOx with a thickness in the range of 10 nm to 20 nm,
o A fourth dielectric layer (33) comprising SiOxNy with a thickness in the range of 20 nm to 30 nm,
o A top dielectric layer (34) comprising TiOx with a thickness in the range of 1 nm to 5 nm.

11. A low-e coated (20) glass (10) according to claim 10, **characterized in that** it comprises the following steps, respectively, from the glass to the atmosphere;
o A first dielectric layer (21) comprising SixNy with a thickness in the range of 12 nm to 18 nm,
o A reflection reducing layer (22) comprising TiOx with a thickness in the range of 4 nm to 6 nm,
o A first nucleating layer (23) comprising ZnAlOx with a thickness in the range of 12 to 18 nm,
o A first barrier layer (24) comprising NiCr with a thickness in the range of 0.8 nm to 1.5 nm,
o A first infrared reflective layer (25) comprising Ag with a thickness in the range of 12 to 18 nm,
o A second barrier layer (26) comprising NiCrOx with a thickness in the range of 1.8 nm to 2.2 nm,
o A second dielectric layer (27) comprising ZnAlOx with a thickness in the range of 11 nm to 15 nm,
o A first thermal barrier layer (281) comprising SixNy with a thickness in the range of 20 nm to 30 nm,
o A regulating layer (282) comprising NiCrOx with a thickness in the range of 4 nm to 7 nm,
o A second thermal barrier layer (283) comprising SixNy with a thickness in the range of 20 nm to 30 nm,
o A second nucleating layer (29) comprising ZnAlOx with a thickness in the range of 11 to 15 nm,
o A second infrared reflective layer (30) comprising Ag with a thickness in the range of 12 to 18 nm,
o A third barrier layer (31) comprising NiCrOx with a thickness in the range of 1.8 nm to 2.2 nm,
o A third dielectric layer (32) comprising ZnAlOx with a thickness in the range of 11 nm to 15 nm,
o A fourth dielectric layer (33) comprising SiOxNy with a thickness in the range of 22 nm to 25 nm,
o A top dielectric layer (34) comprising TiOx with a thickness in the range of 2 nm to 4 nm.

## Patentansprüche

1. Glas (10) mit einer wärmebehandelbaren Low-E-Beschichtung (20) zur Sonnenkontrolle und thermischen Isolierung der Oberflächen des Glases (10), **dadurch gekennzeichnet, dass** die Low-E-Beschichtung (20) die folgenden Schichten umfasst, jeweils vom Glas zur Atmosphäre:
o Eine erste dielektrische Schicht (21), die mindestens eines der Elemente SixNy, SiOxNy, ZnSnOx, TiOx, TiNx, ZrNx umfasst,
o Eine reflexionsmindernde Schicht (22), die TiOx umfasst,
o Eine erste Keimbildungsschicht (23), die mindestens eines der Elemente SixNy, TiNx, ZrNx, ZnSnOx, ZnAlOx, SiOxNy, TiOx, ZnOx umfasst,
∘ Eine erste Sperrschicht (24), die mindestens eines der Elemente NiCr und/oder NiCrOx umfasst,
o Eine erste infrarotreflektierende Schicht (25),
o Eine zweite Sperrschicht (26), die mindestens eines der Elemente NiCr und/oder NiCrOx umfasst,
o Eine zweite dielektrische Schicht (27), die mindestens eines der Elemente SixNy, TiNx, ZrNx, ZnSnOx, ZnAlOx, SiOxNy, TiOx, ZnOx umfasst,
o Eine zweite Keimbildungsschicht (29), die mindestens eines der Elemente TiOx, ZnAlOx, ZnOx, ZnSnOx umfasst,
∘ Eine zweite infrarotreflektierende Schicht (30),
o Eine dritte Sperrschicht (31), die mindestens eines der Elemente NiCr und/oder NiCrOx umfasst,
o Eine dritte dielektrische Schicht (32), die mindestens eines der Elemente SixNy, TiNx, ZrNx, ZnSnOx, ZnAlOx, SiOxNy, TiOx, ZnOx umfasst,
o Eine vierte dielektrische Schicht (33), die mindestens eines der Elemente ZnAlOx, SiOxNy, TiOx umfasst,
∘ Eine obere dielektrische Schicht (34), die TiOx umfasst,
und
dass sie eine mittlere Sandwichstruktur (28) umfasst, die zwischen der zweiten dielektrischen Schicht und der zweiten Keimbildungsschicht angeordnet ist und die folgenden Schichten jeweils vom Glas nach außen hin umfasst, um sicherzustellen, dass die mechanischen, Durchlässigkeits- und Farbwerte der Low-E-Beschichtung vor und nach der Wärmebehandlung innerhalb der Herstellungstoleranzen stabil bleiben;
- Eine erste Wärmesperrschicht (281), die SixNy umfasst,
- Eine Regulierungsschicht (282), die mindestens eines der Elemente NiCr und/oder NiCrOx umfasst,
- Eine zweite Wärmesperrschicht (283), die SixNy umfasst.

2. Low-E-beschichtetes (20) Glas (10) nach Anspruch 1, **dadurch gekennzeichnet, dass** die erste infrarotreflektierende Schicht (25) aus mindestens einer der Elementen Silber und/oder Silberoxid und/oder Kupfer und/oder Kupferoxid und/oder Gold und/oder Goldoxide besteht.

3. Low-E-beschichtetes (20) Glas (10) nach Anspruch 2, **dadurch gekennzeichnet, dass** die erste infrarotreflektierende Schicht (25) aus einem von Silber und/oder Silberoxiden besteht.

4. Low-E-beschichtetes (20) Glas (10) nach einem der vorhergehenden Ansprüche, **dadurch gekennzeichnet, dass** die zweite infrarotreflektierende Schicht (30) aus mindestens einer der Elementen Silber und/oder Silberoxid und/oder Kupfer und/oder Kupferoxid und/oder Gold und/oder Goldoxiden besteht.

5. Low-E-beschichtetes (20) Glas (10) nach Anspruch 4, **dadurch gekennzeichnet, dass** die zweite infrarotreflektierende Schicht (30) aus einem von Silber und/oder Silberoxiden besteht.

6. Low-E-beschichtetes (20) Glas (10) nach einem der vorhergehenden Ansprüche, **dadurch gekennzeichnet, dass** die mittlere Sandwichstruktur (28) die folgenden Schichten umfasst, jeweils vom Glas (10) zur Atmosphäre:
§ Eine erste Wärmesperrschicht (281), die SixNy umfasst,
§ Eine Regulierungsschicht (282), die NiCrOx umfasst,
§ Eine zweite Wärmesperrschicht (283), die SixNy umfasst.

7. Low-E-beschichtetes (20) Glas (10) nach Anspruch 6, **dadurch gekennzeichnet, dass** die mittlere Sandwichstruktur (28) die folgenden Schichten umfasst, jeweils vom Glas (10) zur Atmosphäre:
§ Eine erste Wärmesperrschicht (281), die SixNy mit einer Dicke im Bereich von 20 nm bis 30 nm umfasst,
§ Eine Regulierungsschicht (282), die NiCrOx mit einer Dicke im Bereich von 4 nm bis 7 nm umfasst,
§ Eine zweite Wärmesperrschicht (283), die SixNy mit einer Dicke im Bereich von 20 nm bis 30 nm umfasst.

8. Low-E-beschichtetes (20) Glas (10) nach Anspruch 1, **dadurch gekennzeichnet, dass** es die folgenden Schichten umfasst, jeweils vom Glas zur Atmosphäre:
∘ Eine erste dielektrische Schicht (21), ausgewählt aus SixNy oder SiOxNy,
o Eine reflexionsmindernde Schicht (22), die TiOx umfasst,
∘ Eine erste Keimbildungsschicht (23), ausgewählt aus ZnOx oder ZnAlOx,
∘ Eine erste Sperrschicht (24), ausgewählt aus NiCr oder NiCrOx,
o Eine infrarotreflektierende Schicht (25), die Ag umfasst,
∘ Eine zweite Sperrschicht (26), ausgewählt aus NiCr oder NiCrOx,
∘ Eine zweite dielektrische Schicht (27), ausgewählt aus ZnAlOx oder ZnOx,
o Eine erste Wärmesperrschicht (281), die SixNy umfasst,
∘ Eine Regulierungsschicht (282), ausgewählt aus NiCr oder NiCrOx,
o Eine zweite Wärmesperrschicht (283), die SixNy umfasst,
o Eine zweite Keimbildungsschicht (29), ausgewählt aus ZnAlOx oder ZnOx,
o Eine zweite infrarotreflektierende Schicht (30), die Ag umfasst,
∘ Eine dritte Sperrschicht (31), ausgewählt aus NiCr oder NiCrOx,
∘ Eine dritte dielektrische Schicht (32), ausgewählt aus ZnOx oder ZnAlOx,
o Eine vierte dielektrische Schicht (33), ausgewählt aus ZnAlOx oder SiOxNy,
∘ Eine obere dielektrische Schicht (34), die TiOx umfasst.

9. Low-E-beschichtetes (20) Glas (10) nach Anspruch 8, **dadurch gekennzeichnet, dass** es die folgenden Schichten umfasst, jeweils vom Glas zur Atmosphäre:
o Eine erste dielektrische Schicht (21), die SixNy umfasst,
o Eine reflexionsmindernde Schicht (22), die TiOx umfasst,
o Eine erste Keimbildungsschicht (23), die ZnAlOx umfasst,
o Eine erste Sperrschicht (24), die NiCr umfasst,
o Eine infrarotreflektierende Schicht (25), die Ag umfasst,
∘ Eine zweite Sperrschicht (26), die NiCrOx umfasst,
o Eine zweite dielektrische Schicht (27), die ZnAlOx umfasst,
o Eine erste Wärmesperrschicht (281), die SixNy umfasst,
∘ Eine Regulierungsschicht (282), die NiCr oder NiCrOx umfasst,
o Eine zweite Wärmesperrschicht (283), die SixNy umfasst,
o Eine zweite Keimbildungsschicht (29), die ZnAlOx umfasst,
o Eine zweite infrarotreflektierende Schicht (30), die Ag umfasst,
∘ Eine dritte Sperrschicht (31), die NiCrOx umfasst,
∘ Eine dritte dielektrische Schicht (32), die ZnAlOx umfasst,
∘ Eine vierte dielektrische Schicht (33), die SiOxNy umfasst,
∘ Eine obere dielektrische Schicht (34), die TiOx umfasst.

10. Low-E-beschichtetes (20) Glas (10) nach Anspruch 9, **dadurch gekennzeichnet, dass** es die folgenden Schichten umfasst, jeweils vom Glas zur Atmosphäre:
o Eine erste dielektrische Schicht (21), die SixNy mit einer Dicke im Bereich von 10 nm bis 20 nm umfasst,
o Eine reflexionsmindernde Schicht (22), die TiOx mit einer Dicke im Bereich von 3 nm bis 7 nm umfasst,
o Eine erste Keimbildungsschicht (23), die ZnAlOx mit einer Dicke im Bereich von 10 nm bis 20 nm umfasst,
∘ Eine erste Sperrschicht (24), die NiCr mit einer Dicke im Bereich von 0,5 nm bis 3 nm umfasst,
o Eine erste infrarotreflektierende Schicht (25), die Ag mit einer Dicke im Bereich von 10 nm bis 20 nm umfasst,
o Eine zweite Sperrschicht (26), die NiCrOx mit einer Dicke im Bereich von 1 nm bis 3 nm umfasst,
o Eine zweite dielektrische Schicht (27), die ZnAlOx mit einer Dicke im Bereich von 10 bis 20 nm umfasst,
o Eine erste Wärmesperrschicht (281), die SixNy mit einer Dicke im Bereich von 20 nm bis 30 nm umfasst,
o Eine Regulierungsschicht (282), die NiCrOx mit einer Dicke im Bereich von 4 nm bis 7 nm umfasst,
o Eine zweite Wärmesperrschicht (283), die SixNy mit einer Dicke im Bereich von 20 nm bis 30 nm umfasst,
o Eine zweite Keimbildungsschicht (29), die ZnAlOx mit einer Dicke im Bereich von 10 bis 20 nm umfasst,
o Eine zweite infrarotreflektierende Schicht (30), die Ag mit einer Dicke im Bereich von 10 bis 20 nm umfasst,
o Eine dritte Sperrschicht (31), die NiCrOx mit einer Dicke im Bereich von 1 nm bis 3 nm umfasst,
o Eine dritte dielektrische Schicht (32), die ZnAlOx mit einer Dicke im Bereich von 10 nm bis 20 nm umfasst,
o Eine vierte dielektrische Schicht (33), die SiOxNy mit einer Dicke im Bereich von 20 nm bis 30 nm umfasst,
o Eine obere dielektrische Schicht (34), die TiOx mit einer Dicke im Bereich von 1 nm bis 5 nm umfasst.

11. Low-E-beschichtetes (20) Glas (10) nach Anspruch 10, **dadurch gekennzeichnet, dass** es die folgenden Schritte umfasst, jeweils vom Glas zur Atmosphäre:
o Eine erste dielektrische Schicht (21), die SixNy mit einer Dicke im Bereich von 12 nm bis 18 nm umfasst,
o Eine reflexionsmindernde Schicht (22), die TiOx mit einer Dicke im Bereich von 4 nm bis 6 nm umfasst,
o Eine erste Keimbildungsschicht (23), die ZnAlOx mit einer Dicke im Bereich von 12 bis 18 nm umfasst,
∘ Eine erste Sperrschicht (24), die NiCr mit einer Dicke im Bereich von 0,8 nm bis 1,5 nm umfasst,
o Eine erste infrarotreflektierende Schicht (25), die Ag mit einer Dicke im Bereich von 12 bis 18 nm umfasst,
o Eine zweite Sperrschicht (26), die NiCrOx mit einer Dicke im Bereich von 1,8 nm bis 2,2 nm umfasst,
o Eine zweite dielektrische Schicht (27), die ZnAlOx mit einer Dicke im Bereich von 11 nm bis 15 nm umfasst,
o Eine erste Wärmesperrschicht (281), die SixNy mit einer Dicke im Bereich von 20 nm bis 30 nm umfasst,
o Eine Regulierungsschicht (282), die NiCrOx mit einer Dicke im Bereich von 4 nm bis 7 nm umfasst,
o Eine zweite Wärmesperrschicht (283), die SixNy mit einer Dicke im Bereich von 20 nm bis 30 nm umfasst,
o Eine zweite Keimbildungsschicht (29), die ZnAlOx mit einer Dicke im Bereich von 11 bis 15 nm umfasst,
o Eine zweite infrarotreflektierende Schicht (30), die Ag mit einer Dicke im Bereich von 12 bis 18 nm umfasst,
o Eine dritte Sperrschicht (31), die NiCrOx mit einer Dicke im Bereich von 1,8 nm bis 2,2 nm umfasst,
o Eine dritte dielektrische Schicht (32), die ZnAlOx mit einer Dicke im Bereich von 11 nm bis 15 nm umfasst,
o Eine vierte dielektrische Schicht (33), die SiOxNy mit einer Dicke im Bereich von 22 nm bis 25 nm umfasst,
o Eine obere dielektrische Schicht (34), die TiOx mit einer Dicke im Bereich von 2 nm bis 4 nm umfasst.

## Revendications

1. Un verre (10) ayant un revêtement low-e (20) pouvant être traité thermiquement pour le contrôle solaire et l'isolation thermique des surfaces du verre (10), **caractérisé en ce que** ledit revêtement low-e (20) comprend les couches suivantes, respectivement, du verre à l'atmosphère;
∘ Une première couche diélectrique (21) comprenant au moins un des éléments SixNy, SiOxNy, ZnSnOx, TiOx, TiNx, ZrNx,
∘ Une couche de réduction de la réflexion (22) comprenant du TiOx,
∘ Une première couche de nucléation (23) comprenant au moins un des éléments SixNy, TiNx, ZrNx, ZnSnOx, ZnAlOx, SiOxNy, TiOx, ZnOx,
∘ Une première couche barrière (24) comprenant au moins un des éléments NiCr et/ou NiCrOx,
∘ Une première couche réfléchissante à l'infrarouge (25),
∘ Une deuxième couche barrière (26) comprenant au moins un des éléments NiCr et/ou NiCrOx,
∘ Une deuxième couche diéléctrique (27) comprenant au moins un des éléments SixNy, TiNx, ZrNx, ZnSnOx, ZnAlOx, SiOxNy, TiOx, ZnOx,
o Une deuxième couche de nucléation (29) comprenant au moins un des éléments TiOx, ZnAlOx, ZnOx, ZnSnOx,
o Une deuxième couche réfléchissante à l'infrarouge (30),
∘ Une troisième couche barrière (31) comprenant au moins un des éléments NiCr et/ou NiCrOx,
∘ Une troisième couche diéléctrique (32) comprenant au moins un des éléments SixNy, TiNx, ZrNx, ZnSnOx, ZnAlOx, SiOxNy, TiOx, ZnOx,
∘ Une quatrième couche diélectrique (33) comprenant au moins un des éléments ZnAlOx, SiOxNy, TiOx,
∘ Une couche diélectrique supérieure (34) comprenant du TiOx
et
qu'il comprend une structure sandwich intermédiaire (28), positionnée entre la deuxième couche diélectrique et la deuxième couche de nucléation et comprenant les couches suivantes, respectivement, à partir de l'extérieur du verre, afin de garantir que les valeurs mécaniques, de perméabilité et de couleur du revêtement low-e avant et après traitement thermique restent stables dans les limites des tolérances de fabrication;
- Une première couche de barrière thermique (281) comprenant du SixNy,
- Une couche de régulation (282) comprenant au moins un des éléments NiCr et/ou NiCrOx,
- Une deuxième couche de barrière thermique (283) comprenant du SixNy.

2. Un verre (10) à revêtement low-e (20) selon la revendication 1, **caractérisé en ce que** ladite première couche réfléchissante à l'infrarouge (25) est au moins l'un de l'argent et/ou de l'oxyde d'argent et/ou du cuivre et/ou de l'oxyde de cuivre et/ou de l'or et/ou des oxydes d'or.

3. Une verre (10) à revêtement low-e (20) selon la revendication 2, **caractérisé en ce que** la première couche réfléchissante à l'infrarouge (25) est constituée d'argent et/ou d'oxydes d'argent.

4. Une verre (10) à revêtement low-e (20) selon l'une quelconque des revendications précédentes, **caractérisé en ce que** la deuxième couche réfléchissante à l'infrarouge (30) est au moins l'une de l'argent et/ou l'oxyde d'argent et/ou le cuivre et/ou l'oxyde de cuivre et/ou l'or et/ou les oxydes d'or.

5. Un verre (10) à revêtement low-e (20) selon la revendication 4, **caractérisé en ce que** ladite deuxième couche réfléchissante à l'infrarouge (30) est au moins l'un de l'argent et/ou de l'oxyde d'argent.

6. Une verre (10) à revêtement low-e (20) selon l'une quelconque des revendications précédentes, **caractérisé en ce que** ladite structure sandwich intermédiaire (28) comprend les couches suivantes, respectivement, du verre (10) à l'atmosphère;
§ Une première couche de barrière thermique (281) comprenant du SixNy,
§ Une couche de régulation (282) comprenant du NiCrOx,
§ Une deuxième couche de barrière thermique (283) comprenant du SixNy.

7. Une verre (10) à revêtement low-e (20) selon la revendication 6, **caractérisé en ce que** la structure sandwich intermédiaire (28) comprend les couches suivantes, respectivement, du verre (10) à l'atmosphère;
§ Une première couche de barrière thermique (281) comprenant du SixNy d'une épaisseur comprise entre 20 nm à 30 nm,
§ Une couche de régulation (282) comprenant du NiCrOx d'une épaisseur comprise entre 4 nm à 7 nm,
§ Une deuxième couche de barrière thermique (283) comprenant du SixNy d'une épaisseur comprise entre 20 nm à 30 nm.

8. Une verre (10) à revêtement low-e (20) selon la revendication 1, **caractérisé en ce qu'**elle comprend les couches suivantes, respectivement, du verre à l'atmosphère;
o Une première couche diélectrique (21) choisie parmi SixNy ou SiOxNy,
o Une couche de réduction de la réflexion (22) comprenant du TiOx,
o Une première couche de nucléation (23) choisie parmi ZnOx ou ZnAlOx,
∘ Une première couche de barrière (24) choisie parmi NiCr ou NiCrOx,
o Une couche réfléchissante à l'infrarouge (25) comprenant de l'Ag,
∘ Une deuxième couche de barrière (26) choisie parmi NiCr ou NiCrOx,
o Une deuxième couche diélectrique (27) choisie parmi ZnAlOx ou ZnOx,
o Une première couche de barrière thermique (281) comprenant du SixNy,
o Une couche de régulation (282) choisie parmi NiCr ou NiCrOx,
o Une deuxième couche de barrière thermique (283) comprenant du SixNy,
o Une deuxième couche de nucléation (29) choisie parmi ZnAlOx ou ZnOx,
o Une deuxième couche réfléchissante à l'infrarouge (30) comprenant de l'Ag,
∘ Une troisième couche de barrière (31) choisie parmi NiCr ou NiCrOx,
o Une troisième couche diélectrique (32) choisie parmi ZnOx ou ZnAlOx,
o Une quatrième couche diélectrique (33) choisie parmi ZnAlOx ou SiOxNy,
o Une couche diélectrique supérieure (34) comprenant du TiOx.

9. Une verre (10) à revêtement low-e (20) selon la revendication 8, **caractérisé en ce qu'**elle comprend les couches suivantes, respectivement, du verre à l'atmosphère;
o Une première couche diélectrique (21) comprenant du SixNy,
o Une couche de réduction de la réflexion (22) comprenant du TiOx,
o Une première couche de nucléation (23) comprenant du ZnAlOx,
o Une première couche de barrière (24) comprenant du NiCr,
o Une couche réfléchissante à l'infrarouge (25) comprenant de l'Ag,
o Une deuxième couche de barrière (26) comprenant du NiCrOx,
o Une deuxième couche diélectrique (27) comprenant du ZnAlOx,
o Une première couche de barrière thermique (281) comprenant du SixNy,
o Une couche de régulation (282) comprenant du NiCr ou du NiCrOx,
o Une deuxième couche de barrière thermique (283) comprenant du SixNy,
o Une deuxième couche de nucléation (29) comprenant du ZnAlOx,
o Une deuxième couche réfléchissante à l'infrarouge (30) comprenant de l'Ag,
o Une troisième couche de barrière (31) comprenant du NiCrOx,
o Une troisième couche diélectrique (32) comprenant du ZnAlOx,
o Une quatrième couche diélectrique (33) comprenant du SiOxNy,
o Une couche diélectrique supérieure (34) comprenant du TiOx.

10. Une verre (10) à revêtement low-e (20) selon la revendication 9, **caractérisé en ce qu'**elle comprend les couches suivantes, respectivement, du verre à l'atmosphère;
∘ Une première couche diélectrique (21) comprenant du SixNy d'une épaisseur comprise entre 10 nm à 20 nm,
∘ Une couche de réduction de la réflexion (22) comprenant du TiOx d'une épaisseur comprise entre 3 nm à 7 nm,
∘ Une première couche de nucléation (23) comprenant du ZnAlOx d'une épaisseur comprise entre 10 nm à 20 nm,
∘ Une première couche de barrière (24) comprenant du NiCr d'une épaisseur comprise entre 0.5 nm à 3 nm,
∘ Une première couche réfléchissante à l'infrarouge (25) comprenant du Ag d'une épaisseur comprise entre 10 nm à 20 nm,
∘ Une deuxième couche de barrière (26) comprenant du NiCrOx d'une épaisseur comprise entre 1 nm à 3 nm,
∘ Une deuxième couche diélectrique (27) comprenant du ZnAlOx d'une épaisseur comprise entre 10 à 20 nm,
∘ Une première couche de barrière thermique (281) comprenant du SixNy d'une épaisseur comprise entre 20 nm à 30 nm,
∘ Une couche de régulation (282) comprenant du NiCrOx d'une épaisseur comprise entre 4 nm à 7 nm,
o Une deuxième couche de barrière thermique (283) comprenant du SixNy d'une épaisseur comprise entre 20 nm à 30 nm,
o Une deuxième couche de nucléation (29) comprenant du ZnAlOx d'une épaisseur comprise entre 10 à 20 nm,
∘ Une deuxième couche réfléchissante à l'infrarouge (30) comprenant du Ag d'une épaisseur comprise entre 10 à 20 nm,
∘ Une troisième couche de barrière (31) comprenant du NiCrOx d'une épaisseur comprise entre 1 nm à 3 nm,
∘ Une troisième couche diélectrique (32) comprenant du ZnAlOx d'une épaisseur comprise entre 10 nm à 20 nm,
∘ Une quatrième couche diélectrique (33) comprenant du SiOxNy d'une épaisseur comprise entre 20 nm à 30 nm,
∘ Une couche diélectrique supérieure (34) comprenant du TiOx d'une épaisseur comprise entre 1 nm à 5 nm.

11. Une verre (10) à revêtement low-e (20) selon la revendication 10, **caractérisé en ce qu'**elle comprend les étapes suivantes, respectivement, du verre à l'atmosphère;
∘ Une première couche diélectrique (21) comprenant du SixNy d'une épaisseur comprise entre 12 nm à 18 nm,
∘ Une couche de réduction de la réflexion (22) comprenant du TiOx d'une épaisseur comprise entre 4 nm à 6 nm,
∘ Une première couche de nucléation (23) comprenant du ZnAlOx d'une épaisseur comprise entre 12 à 18 nm,
∘ Une première couche de barrière (24) comprenant du NiCr d'une épaisseur comprise entre 0.8 nm à 1.5 nm,
∘ Une première couche réfléchissante à l'infrarouge (25) comprenant du Ag d'une épaisseur comprise entre 12 à 18 nm,
∘ Une deuxième couche de barrière (26) comprenant du NiCrOx d'une épaisseur comprise entre 1.8 nm à 2.2 nm,
o Une deuxième couche diélectrique (27) comprenant du ZnAlOx d'une épaisseur comprise entre **11** nm à 15 nm,
∘ Une première couche de barrière thermique (281) comprenant du SixNy d'une épaisseur comprise entre 20 nm à 30 nm,
∘ Une couche de régulation (282) comprenant du NiCrOx d'une épaisseur comprise entre 4 nm à 7 nm,
o Une deuxième couche de barrière thermique (283) comprenant du SixNy d'une épaisseur comprise entre 20 nm à 30 nm,
o Une deuxième couche de nucléation (29) comprenant du ZnAlOx d'une épaisseur comprise entre **11** à 15 nm,
∘ Une deuxième couche réfléchissante à l'infrarouge (30) comprenant du Ag d'une épaisseur comprise entre 12 à 18 nm,
∘ Une troisième couche de barrière (31) comprenant du NiCrOx d'une épaisseur comprise entre 1.8 nm à 2.2 nm,
∘ Une troisième couche diélectrique (32) comprenant du ZnAlOx d'une épaisseur comprise entre **11** nm à 15 nm,
∘ Une quatrième couche diélectrique (33) comprenant du SiOxNy d'une épaisseur comprise entre 22 nm à 25 nm,
∘ Une couche diélectrique supérieure (34) comprenant du TiOx d'une épaisseur comprise entre 2 nm à 4 nm.
